# EUROPEAN PATENT APPLICATION

(11) **EP 2 362 305 A1**
(43) Date of publication of application: **31.08.2011**
(21) Application number: 10188177.9
(22) Date of filing: 20.10.2010
(51) Int. Cl.: G06F 3/14

(54) **Display control method according to operation mode of display apparatus and digital device with multiple displays using the same**

(30) Priority: 19.11.2009 KR 20090112133
(71) Applicant: SAMSUNG ELECTRONICS CO., LTD., Suwon-si Gyeonggi-do 442-742 (KR)
(72) Inventor: Yu, Jin-kyu, Gyeonggi-do (KR)
(74) Representative: Robinson, Ian Michael

(57) **Abstract**

In a display control method, if an item displayed on a first display apparatus is moved to a second display apparatus, and if the operation mode of the second display apparatus is a mode capable of displaying the item, the item is moved to and displayed on the second display apparatus. Accordingly, the item is moved to the display apparatus and displayed on the display apparatus only when the display apparatus operates in a mode capable of displaying the item. An item is not moved to the display apparatus when that item cannot be shown.

## Description

### CROSS-REFERENCE TO RELATED APPLICATIONS

This application claims priority from Korean Patent Application No. 10-2009-0112133, filed on November 19, 2009 in the Korean Intellectual Property Office, the disclosure of which is incorporated herein by reference in its entirety.

### BACKGROUND

### 1. Field

Apparatuses and methods consistent with exemplary embodiments relate to a display control method, and more particularly, to a display control method of a system in which a single personal computer (PC) is connected to a plurality of display apparatuses.

### 2. Description of the Related Art

A single personal computer (PC) may be connected to a plurality of monitors, and a digital television (DTV) may be used as a monitor since the DTV can display an image input from a PC.

An input source for a monitor is typically a PC. That is, a monitor is usually used to display an image received from a PC. However, a DTV is generally used to view a TV program rather than to display an image received from a PC.

In order to display an image received from a PC on a DTV, an operation mode of the DTV must be set to be a PC mode. Otherwise, the DTV cannot display the image received from the PC. The DTV may also be connected to a single PC together with a monitor to provide dual monitors.

### SUMMARY

Exemplary embodiments address at least the above problems and/or disadvantages and other disadvantages not described above. Also, the exemplary embodiments are not required to overcome the disadvantages described above, and may not overcome any of the problems described above.

Exemplary embodiments provide a display control method for moving an item to and displaying the item on a display apparatus according to an operation mode of the display apparatus.

According to an aspect of an exemplary embodiment, there is provided a display control method including determining an operation mode of a second display apparatus if a situation that among a plurality of display apparatuses, an item displayed on a first display apparatus is moved to and displayed on the second display apparatus occurs, and moving the item to the second display apparatus and displaying the item on the second display apparatus if the operation mode of the second display apparatus is a mode for being capable of displaying the item.

The display control method may further include controlling the item not to be moved to and displayed on the second display apparatus if the operation mode of the second display apparatus is a mode for being not capable of displaying the item.

In the controlling the item, the item may be controlled to move within a display of the first display apparatus.

The mode for being capable of displaying the item may be a mode for displaying an image received from an apparatus which generates the item, and the mode for being not capable of displaying the item may be a mode for displaying an image except for an image received from the apparatus which generates the item.

The display control method may further include if the operation mode of the second display apparatus is a mode for being not capable of displaying the item, changing the operation mode of the second display apparatus into the mode for being capable of displaying the item, moving the item to the second display apparatus, and displaying the item on the second display apparatus.

The display control method may further include if the operation mode of the second display apparatus is a mode for being not capable of displaying the item, requesting that the operation mode of the second display apparatus changes into the mode for being capable of displaying the item.

The display control method may further include if an operation mode change completion message is received in response to the request from the second display apparatus, moving the item to the second display apparatus.

The mode for being capable of displaying the item may be a mode for displaying an image received from an apparatus which generates the item, and the mode for being not capable of displaying the item may be a mode for displaying an image except for an image received from the apparatus which generates the item.

The apparatus which generates the item may be a computer.

The first display apparatus may be a monitor or a broadcast receiving apparatus, and the second display apparatus may be a broadcast receiving apparatus.

The item may include at least one of windows, widgets, icons and graphic controllers.

According to an aspect of another exemplary embodiment, there is provided a digital apparatus including a video generation unit to generate an image to be displayed on a plurality of display apparatuses, and a control unit which determines an operation mode of a second display apparatus if a situation that among the plurality of display apparatuses, an item displayed on an image of a first display apparatus is moved to and displayed on an image of the second display apparatus occurs, and which moves the item to the image of the second display apparatus if the operation mode of the second display apparatus is a mode for being capable of displaying the item.

The control unit may control the item not to be moved to and displayed on the image of the second display apparatus if the operation mode of the second display apparatus is a mode for being not capable of displaying the item.

The mode for being capable of displaying the item may be a mode for displaying an image received from an apparatus which generates the item, and the mode for being not capable of displaying the item may be a mode for displaying an image except for an image received from the apparatus which generates the item.

If the operation mode of the second display apparatus is a mode for being not capable of displaying the item, the control unit may change the operation mode of the second display apparatus into the mode for being capable of displaying the item, and move the item to the image of the second display apparatus.

The first display apparatus may be a monitor or a broadcast receiving apparatus, and the second display apparatus may be a broadcast receiving apparatus.

The item may include at least one of windows, widgets, icons and graphic controllers.

According to an aspect of another exemplary embodiment, there is provided a display apparatus which displays an image received from an external device, the display apparatus including an input unit which receives the image from the external device, a display, and a control unit which transmits information regarding an operation mode of the display apparatus to the external device, and displays the image input from the input unit on the display if an operation mode change request is received from the external device, wherein the image received from the external device is an image in which an item in an image displayed on another display apparatus is moved and displayed.

If a user command is input to move the item displayed on the another display apparatus onto the display of the display apparatus, the external device may request the information regarding the operation mode of the display apparatus and receive the information from the control unit of the display apparatus.

The item may include at least one of windows, widgets, icons and graphic controllers.

### BRIEF DESCRIPTION OF THE DRAWINGS

The above and/or other aspects will be more apparent by describing certain exemplary embodiments with reference to the accompanying drawings, in which:

FIG. 1 is a block diagram of a computing system to which the exemplary embodiments can be applied;

FIG. 2 is a detailed block diagram of a personal computer according to an exemplary embodiment;

FIG. 3 is a detailed block diagram of a digital television according to an exemplary embodiment;

FIG. 4 is a flow chart illustrating a display control method using a window movement limitation scheme;

FIG. 5 illustrates that a window is moving from a monitor to a digital television;

FIG. 6 illustrates that the DTV is in a TV mode and not in a PC mode, and a window cannot move from a monitor to the DTV; and

FIG. 7 is a flow chart illustrating a display control method using an automatic mode change scheme.

### DETAILED DESCRIPTION OF EXEMPLARY EMBODIMENTS

Certain exemplary embodiments will now be described in greater detail with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, the inventive concept can be practiced without those specifically defined matters. Also, well-known functions or constructions are not described in detail since they would obscure the exemplary embodiments with unnecessary detail.

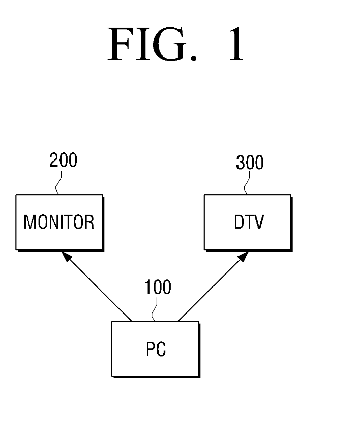

FIG. 1 is a block diagram of a computing system to which the exemplary embodiments can be applied. As illustrated in FIG. 1, the computing system is built by connecting a PC 100 to a monitor 200 and a DTV 300 as dual monitors.

The monitor 200 may be connected to the PC 100, and DTV 300 may be connected to the PC 100 using connection schemes such as the Digital Visual Interface (DVI), D-sub, or High-Definition Multimedia Interface (HDMI). However, these connection schemes are only examples, and other connection schemes may be used.

Since the monitor 200 and the DTV 300 are connected to the PC 100 as dual monitors, some of the tasks performed by the PC 100 may be displayed on the monitor 200 and others may be displayed on the DTV 300.

A window showing the result of a task performed by the PC 100 may be moved from the monitor 200 to the DTV 300 or vice versa by the user's operation.

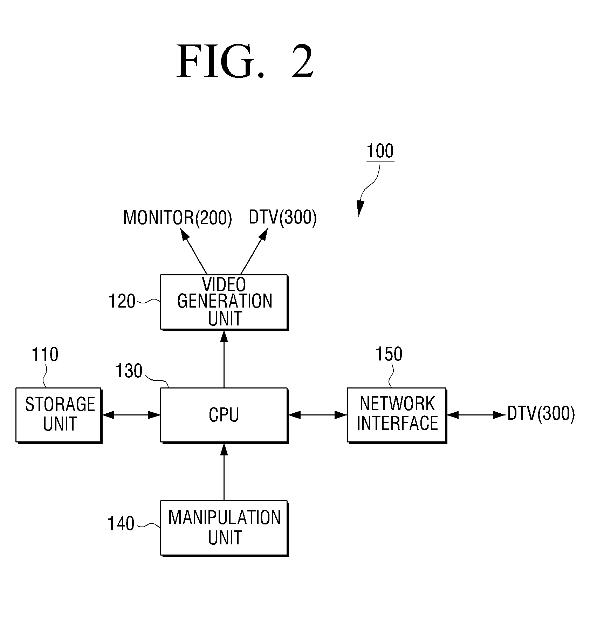

Hereinafter, the PC 100 constituting the computing system as illustrated in FIG. 1 is described in detail with reference to FIG. 2. FIG. 2 is a detailed block diagram of the PC 100 according to an exemplary embodiment.

As illustrated in FIG. 2, the PC 100 may include a storage unit 110, a video generation unit 120, a Central Processing Unit (CPU) 130, a manipulation unit 140, and a network interface 150.

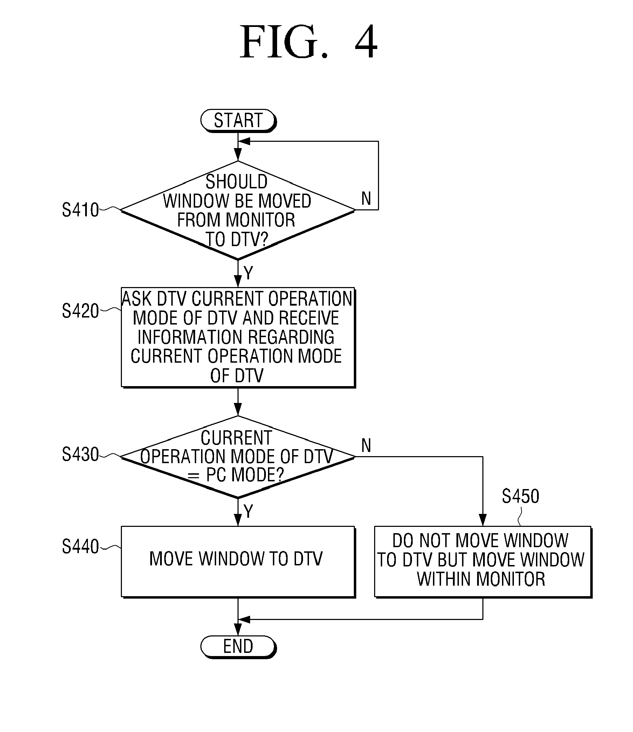

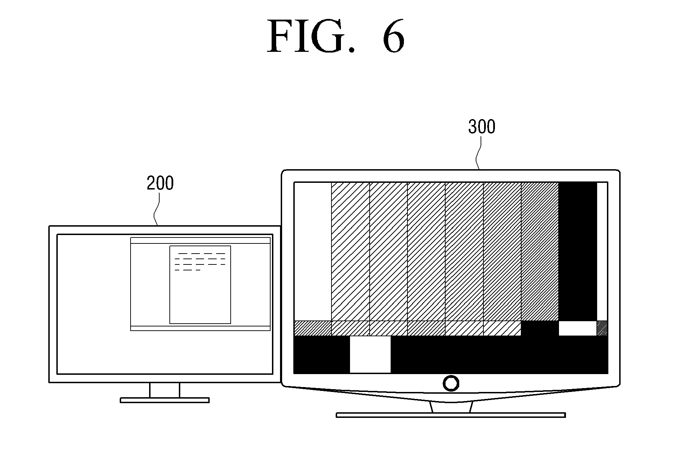

The storage unit 110 provides space for storing programs executed to perform a task and data needed to the programs. In addition, the storage unit 110 stores a program designed to perform a method for controlling a display as illustrated in FIGS. 4 and 6.

The video generation unit 120 generates an image to be displayed on the monitor 200 and transmits the image to the monitor 200, and generates an image to be displayed on the DTV 300 and transmits the image to the DTV 300. These operations of the video generation unit 120 are controlled by the CPU 130.

The manipulation unit 140 is a user interface to transmit a user command to the CPU 130, which may be implemented as a keyboard or a mouse, for example.

The network interface 150 is communicably connected to an external device or an external network. The external device may include the DTV 300, and the external network may include the Internet and a local area network (LAN).

The CPU 130 executes a program stored in the storage unit 110 to perform a task that is input through the manipulation unit 140 by the user, and transmits the result of the task to the video generation unit 120.

The CPU 130 performs display control according to the operation mode of the DTV 300 by controlling video generation operation of the video generation unit 120 or by automatically changing the operation mode of the DTV 300. Detailed description is given below with reference to FIGS. 4 and 6.

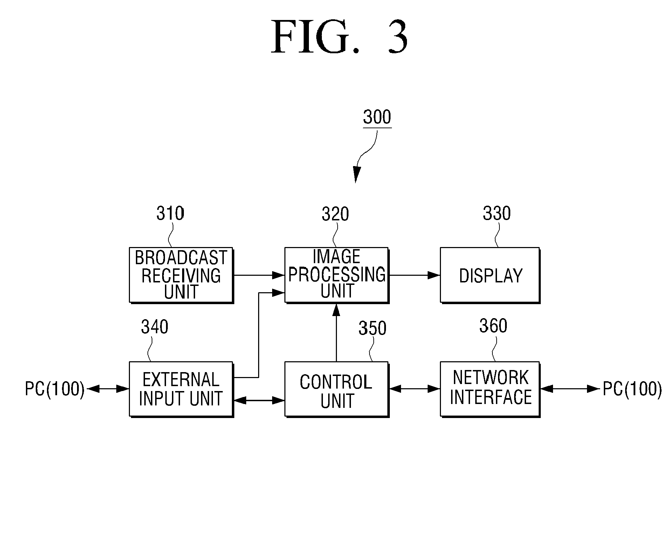

Hereinafter, the DTV 300 constituting the computing system as illustrated in FIG. 1 is described in detail with reference to FIG. 3. FIG. 3 is a detailed block diagram of a DTV 300 according to an exemplary embodiment.

As illustrated in FIG. 3, the DTV 300 may include a broadcast receiving unit 310, an image processing unit 320, a display 330, an external input unit 340, a control unit 350, and a network interface 360.

The broadcast receiving unit 310 receives a broadcast signal via a cable or wirelessly and demodulates the broadcast signal.

The external input unit 340 receives an image from an external device which is connected to the DTV 300. If a computing system is built as illustrated in FIG. 1, the external input unit 340 receives an image generated by the video generation unit 120 of the PC 100.

The image processing unit 320 performs image processing needed for a broadcast signal which is received through the broadcast receiving unit 310, or an image signal which is received through the external input unit 340. The image processing includes image decoding, image scaling, frame rate conversion (FRC), etc.

The display 330 displays an image output from the image processing unit 320.

The network interface 360 is communicably connected to an external device or an external network. The external device may include the PC 100, and the external network may include the Internet and a local area network (LAN).

The control unit 350 transmits information regarding the operation mode of the DTV 300 to the PC 100 through the network interface 360. The control unit 350 can change the operation mode of the DTV 300 by request of the PC 100.

Hereinafter, a display control process by communication between the CPU 130 of the PC 100 and the control unit 350 of the DTV 300 is described in detail, in which the CPU 130 determines the operation mode of the DTV 300 and performs display control according to the operation mode of the DTV 300 by controlling video generation operation of the video generation unit 120 or by automatically changing the operation mode of the DTV 300 is described.

FIG. 4 is a flow chart illustrating a display control method using a window movement limitation scheme.

As illustrated in FIG. 4, when a window showing the result of a task performed by the PC 100 must be moved from the monitor 200 to the DTV 300 as determined in operation S410, the CPU 130 asks the DTV 300 a current operation mode of the DTV 300 through the network interface 150, and receives information regarding the current operation mode of the DTV 300 from the DTV 300 in operation S420.

A window showing the result of a task performed by the PC 100 is usually moved from the monitor 200 to the DTV 300 by the user's operation, but may automatically occur without the user's operation. The user may move the window, for example, by dragging the window from the monitor 200 to the DTV 300.

In operation S430, it is determined whether the DTV is in PC mode. The PC mode is a mode in which the display 330 displays an image received from the PC 100. If the current operation mode of the DTV 300 is a PC mode as determined by operation S430, the CPU 130 moves the window to the DTV 300 in operation S440.

If the DTV is in PC mode, in operation S440 the window is moved to the DTV. As a result of operation S440, the window disappears from the monitor 200 and appears on the DTV 300.

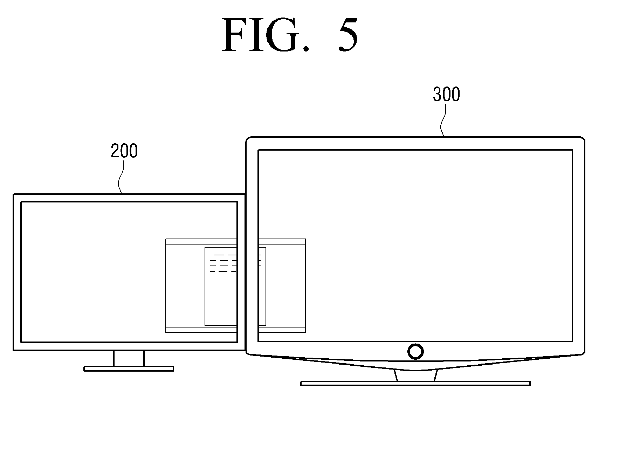

FIG. 5 illustrates a window that is moving from the monitor 200 to the DTV 300.

If the current operation mode of the DTV 300 is not the PC mode, the CPU 130 cannot move the window to the DTV 300 and can only move the window within the monitor 200 (S450).That is, in operation S450, the CPU 130 limits the movement of the window within the monitor 200. FIG. 6 illustrates that the DTV 300 is in a TV mode and not in a PC mode, and thus a window cannot move to the DTV 300 and stays within the monitor 200.

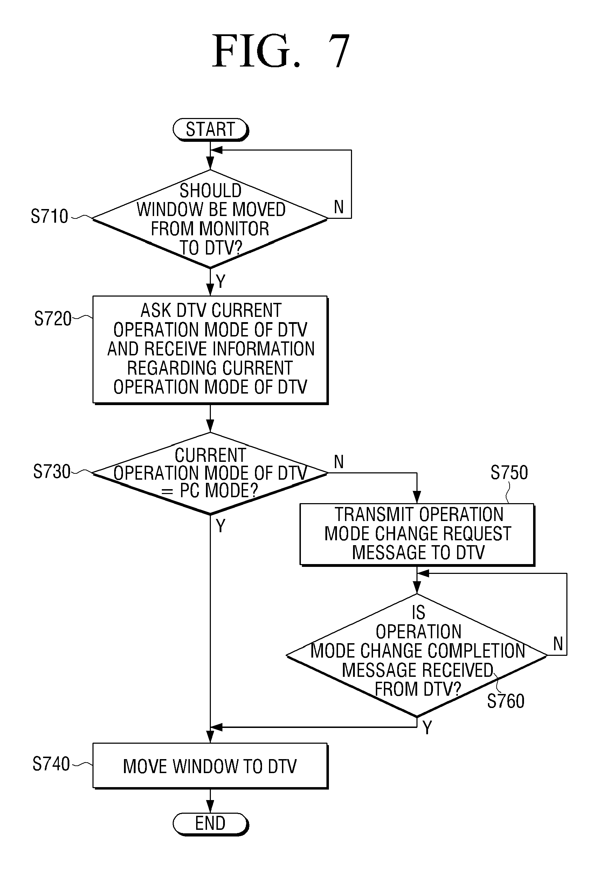

FIG. 7 is a flow chart illustrating a display control method using an automatic mode change scheme.

As illustrated in FIG. 7, if a window showing the result of a task performed by the PC 100 should be moved from the monitor 200 to the DTV 300 as determined by operation 5710, the CPU 130 asks the DTV 300 a current operation mode of the DTV 300 through the network interface 150, and receives information regarding the current operation mode of the DTV 300 from the DTV 300 at operation S720.

If the current operation mode of the DTV 300 is the PC mode as determined by operation S730, the CPU 130 moves the window to the DTV 300 in operation S740.

If the current operation mode of the DTV 300 is not the PC mode, the CPU 130 transmits an operation mode change request message to the DTV 300 through the network interface 150 in operation S750.

The operation mode change request message is a message for requesting change of the operation mode of the DTV 300 to the PC mode. If the DTV 300 receives the operation mode change request message, the control unit 350 changes the operation mode of the DTV 300 into the PC mode.

In response to the operation mode change request message, the control unit 350 of the DTV 300 transmits an operation mode change completion message to the PC 100 through the network interface 360.
If the PC 100 receives the operation mode change completion message from the DTV 300 as determined by operation S760, the CPU 130 moves the window to the DTV 300 in operation S740.

The computing system as shown in FIG. 1 is merely an example. The inventive concept of the exemplary embodiments is not limited to the computing system as shown in FIG. 1.

For example, the monitor 200 shown in FIG. 1 can be replaced with other display apparatuses, the DTV 300 shown in FIG. 1 can be replaced with other display apparatuses, and the PC 100 shown in FIG. 1 can be replaced with other digital devices.

In addition, the computing system is not limited to two display apparatuses, as shown in the exemplary embodiment of FIG. 1, and may include three or more display apparatuses.

In the exemplary embodiment, the TV mode is an example of a mode in which the display 330 cannot display an image generated by the PC 100. in the inventive concept is not limited to a TV mode and the method may include any mode in which the display 330 cannot display an image generated by the PC 100 (for example, a mode in which the display 330 displays images which are not received from the PC 100).

The window is an example of item which can move from a screen of the monitor 200 to a screen of the DTV 300. The inventive concept of the exemplary embodiments is not limited to a window and can be applied to any items that move from the screen of the monitor 200 to the screen of the DTV 300. Examples of items other than the window may include widgets, icons, and graphic controllers.

As can be appreciated from the above description, an item can be moved to and displayed on a display apparatus according to an operation mode of the display apparatus. Therefore, the item is moved to the display apparatus and is displayed on the display apparatus only when the display apparatus operates in a mode capable of displaying the item. As a result, the item is not moved to the display apparatus when the display apparatus is unable to show the item.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display control method, comprising:
displaying an item on a first display apparatus;
determining an operation mode of a second display apparatus when the item displayed on a first display apparatus is moved to the second display apparatus; and
moving the item to the second display apparatus and displaying the item on the second display apparatus if the operation mode of the second display apparatus is a first mode capable of displaying the item.

2. The display control method according to claim 1, further comprising:
controlling the item including preventing the item from being moved to and displayed on the second display apparatus if the operation mode of the second display apparatus is a second mode not capable of displaying the item.

3. The display control method according to claim 2, wherein the controlling the item includes permitting the item to move within the first display apparatus.

4. The display control method according to claim 2 or claim 3, wherein the first mode capable of displaying the item is a mode that displays an image received from an apparatus which generates the item, and the second mode not capable of displaying the item is a mode that displays an image other than the image received from the apparatus which generates the item.

5. The display control method according to any one of claims 1 to 4, further comprising:
if the operation mode of the second display apparatus is a second mode not capable of displaying the item, changing the operation mode of the second display apparatus into the first mode capable of displaying the item, moving the item to the second display apparatus, and displaying the item on the second display apparatus.

6. The display control method according to any one of claims 1 to 5, further comprising:
if the operation mode of the second display apparatus is a second mode not capable of displaying the item, requesting that the operation mode of the second display apparatus changes into the first mode capable of displaying the item.

7. The display control method according to claim 6, further comprising:
sending by the second display apparatus an operation mode change completion message in response to the requesting; and
when the operation mode change completion message is received, moving the item to the second display apparatus.

8. The display control method according to claim 6 or claim 7, wherein the first mode capable of displaying the item is a mode that displays an image received from an apparatus which generates the item, and the second mode not capable of displaying the item is a mode that displays an image other than the image received from the apparatus which generates the item.

9. The display control method according to claim 8, wherein the apparatus which generates the item is a computer.

10. The display control method according to any one of claims 1 to 9, wherein the first display apparatus is a monitor or a broadcast receiving apparatus, and the second display apparatus is a broadcast receiving apparatus.

11. The display control method according to any one of claims 1 to 10, wherein the item includes at least one of a window, a widget, an icon and a graphic controller.

12. A display apparatus which displays an image received from an external device, the display apparatus comprising:
an input unit which receives the image from the external device;
a display; and
a control unit which transmits information regarding an operation mode of the display apparatus to the external device, and displays the image input from the input unit on the display if an operation mode change request is received from the external device,
wherein the image received from the external device comprises an item displayed in an image on another display apparatus and moved from the another display apparatus.

13. The display apparatus according to claim 12, wherein if a user command is input to move the item displayed on the another display apparatus onto the display of the display apparatus, the external device requests information regarding the operation mode of the display apparatus and receives the information from the control unit of the display apparatus.

14. The display apparatus according to claim 12 or claim 13, wherein the item includes at least one of a window, a widget, an icon and a graphic controller.
